# EUROPEAN PATENT APPLICATION

(11) **EP 1 110 461 A1**
(43) Date of publication of application: **27.06.2001**
(21) Application number: 99125370.9
(22) Date of filing: 20.12.1999
(51) Int. Cl.: A23K 1/14, A23K 3/00

(54) **A method of continuous separation of vegetable biomass into a fluid phase and a solids containing phase of pulpy consistence**

(71) Applicant: 2B AG, 8600 Dübendorf (CH)
(72) Inventor: Hansen, Graeme, 8049 Zürich (CH); Grass, Stefan, 8046 Zürich (CH)
(74) Representative: Köver, François

(57) **Abstract**

Moist vegetable biomass (21) is fed (22, 24) to a mixing zone (26) equipped with stirring means (27) of a conditioning vessel (25). Aqueous juice (30) recycled (40) from a subsequent step (39) is also fed (29) to the mixing zone (26). The mixture is stirred while any denser material is allowed to sink to a settling zone (28) located below the mixing zone (26) to eventually be disposed of (31).

The mixture is fed (32) to a rotary comminutor (33) whose operation produces a slurry that is fed (34) to a separator (35) for partitioning into aqueous juice (36) and mush (37). The mush is removed (38). The aqueous juice is divided (39) into major (40) and minor (41) portions whose ratio provides for balance between water entering and leaving the process, considering that the major portion (40) is recycled to the mixing (26) zone and the minor portion (41) removed.

Preferably, the ratio is greater than about 4:1. Preferably, the comminutor has an effective shearing gap whose width is larger than 1 mm.

## Description

The present invention is concerned with a method of continuous separation of vegetable biomass into a fluid phase and a solids containing phase of pulpy consistence. Both the fluid phase and the solids containing phase are adapted for further utilization i.e. they are industrially valuable. The starting material of the method is vegetable biomass that is taken essentially in a moist state.

Vegetable biomass to which the method of the invention can be applied can be taken either in a naturally moist state or in an industrially processed moist state.

An example of vegetable biomass taken in an industrially processed moist state is spent grain, more particularly spent grain utilized in the production of beer, whisky etc.

An example of vegetable biomass taken in its naturally moist state is fresh raw material from which fodder is made, more particularly grass from pastureland. More generally, examples of vegetable biomass in a naturally moist state that can be taken into consideration are fresh plants or parts of plants with especially high protein content and/or sugar content and their fresh residues. This includes in particular clover, lucerne and grass (mentioned above), but also bean plants, soybean, sorghum, mustard, collard greens, turnips, banana leaves, bagass, grape skins, husks/skins, residue of fruit such as residue of citrus fruits and pitted fruit, and also ranking water plants such as duck-weed and water hyacinth, and several others of that nature.

It is known e.g. from US-A-3684520 and/or from FR-A-2294647 and/or FR-A-2294648 to process chopped fresh leafy green crops or other chopped vegetable biomass taken essentially in its naturally moist state, first in a mixer for incorporating desired additives and then in a press to produce a press juice from which proteins and/or chlorophyll may be extracted and a press cake that may be dried economically.

In US-A-3684520 it is more particularly disclosed that pressing causes a disruption of the natural plant structure, allowing various substances that are normally isolated from one another by the structural organization of the plant to come into mutual contact, which causes some of these substances to experience a degradation.

In FR-A-2294647 and/or FR-A-2294648 it is more particularly disclosed to feed the mixer with press juice that is recycled from the press so as to admix recycled press juice to the material to be pressed, the purpose being to use the heat and, if any, the chemicals contained in the recycled juice. The weight of currently recycled press juice is disclosed to be about three times the dry weight of the currently processed biomass and also to be smaller than the weight of press juice currently output for product extraction. It is also disclosed to subject the biomass, prior to the mixing operation, to a mechanical disintegration such as dilaceration or crushing in a hammer mill.

Also, a process somewhat similar to that of the prior art mentioned above is known e.g. from EP-A-0213605, in which process biomass from sugar cane is subjected to the disintegrating action of blades so a to obtain chopped up material having dimensions of 2 cm to 6 cm, which will make it possible to separate the sugar cane material in fibrous and non-fibrous fractions.

Since the fibres in the biomass form cell walls that lock up valuable organic substances such as proteins and other desired products in the cells, some comminuting action will be required to disintegrate the cell walls so as to liberate and allow to recover the valuable organic substances.

In the prior art mentioned above, this comminuting action is achieved by pressing, crushing and/or chopping, which causes the fibres to be shortened randomly. Moreover, this type of treatment does not separate and single out the fibres from each other. Also, pressing is known to be a rather inefficient method of drying when applied to vegetable material containing an appreciable percentage of integral cells having undisrupted cell walls.

A known type of comminutor is usable to disintegrate cell walls and single out fibres of small diameter from each other while preserving fibre length, at least to an appreciable degree. Comminutors of this particular type are disclosed e.g. in the respective published patent or patent application or utility model documents DE-A-2338964, DE-B-3231168, DE-A-3533255, EP-B-0134697, DE-U-78-19825 and DE-U-78-08695, and such comminutors can be purchased e.g. from Siefer Maschinenfabrik GmbH 3 Co. KG, D-42551 Velbert (Germany), cf. for instance (among others) their industrial appliance TRIGONAL^{(R)} type SM 290. Essentially, a comminutor of this particular type is a rotary comminutor having at least one comminuting stage comprised of respective stator and rotor elements associated with each other and having respective operative surfaces spaced from each other by an associated operative gap of the stage, said surfaces being arranged to face each other across the associated operative gap, each of said surfaces being equipped with cutting elements that are directed into the associated operative gap and terminated therein by a cutting edge, an effective shearing gap of a comminuting stage being defined as a smallest distance of approach between the respective cutting edges of the one and the other operative surface in the associated operative gap of the respective stage when the comminutor is operated.

A comminutor of this particular type is fed with a suspension of the product to be comminuted in some carrier fluid or medium. As applicable to vegetable biomass, this will require that some aqueous fluid be added, for the natural moisture of the vegetable biomass will not be sufficient to provide the required suspension, as the comminuting action would produce a paste that would tend to clog the comminutor. However, for obvious economical reasons the quantity of added aqueous fluid is kept as low as technically possible for proper operation of the comminutor i.e. not higher that required for proper homogenization of the material, which means that the vegetable biomass is fed to the comminutor as a rather concentrated suspension of the vegetable biomass in aqueous fluid. Hence, the comminutor will produce a slurry of comminuted biomass material suspended in aqueous juice. This slurry is eventually partitioned into aqueous juice and mush, both of which are then utilized to the best possible extent.

Surprisingly, it has been found that where the usual mode of operation of a comminutor of the type mentioned above is modified so that appreciably more added aqueous fluid is used than would be required for proper homogenization of the material i.e. for proper operation of the comminutor, this modification i.e. the use of much more added aqueous fluid improves the comminutor's capacity to single out fibres of small diameter from each other and to preserve fibre length in the resulting slurry. More particularly, when a somewhat diluted suspension of vegetable biomass in aqueous fluid is fed to a comminutor of this particular type the fibres do not tend to be chopped across their longitudinal dimension but rather to be cut parallel to their longitudinal dimension, which is itself generally parallel to the fibres and cell walls of the biomass material. It is believed that this effect is brought about by the enhanced flow of carrier fluid through the comminutor and the concomitant dilution of the slurry, causing and allowing, respectively, the fibres to become oriented in the flow direction i.e. essentially parallel to the shearing gap and hence, preventing them to be cut across their longitudinal dimension.

Eventually, when the diluted slurry produced by the comminutor has been partitioned, both the resulting aqueous juice and mush appear to have properties not obtained up to now that make them industrially more valuable than aqueous juice and mush obtained from a concentrated slurry, as will be explained below more in detail.

Accordingly, it is an object of the present invention to provide a method of the kind defined above in which a comminutor of the particular type mentioned above is used to produce aqueous juice and mush that are industrially more valuable, more particularly, the utilization of which is technically and/or economically more favourable than has been obtainable up to now.

It is a another object of the present invention to provide a method of the kind defined above in which the slurry is partitioned into a solids containing phase of pulpy consistence that is a fibres containing mush and a fluid phase that is an aqueous juice, the mush containing a high proportion of valuable long thin fibres that can be more economically dried and are capable of more interesting utilization than up to now, the aqueous juice allowing easy separation or direct use of valuable organic substances such as proteins, chlorophyll, fermentable products etc. originating from the cells.

It is still another object of the present invention to provide a method of the kind defined above in which the economical aspect of the turnover of energy, input and output materials can be optimized overall, and, more particularly, there is currently fed to the system significantly less fresh water than would correspond to the flow of aqueous fluid through the comminutor and also, in which all resulting products i.e. all of the aqueous juice and mush are utilized and there is no waste product.

These objects are attained according to the present invention by means of the combination of the method steps defined in claim 1, preferred embodiments of the method being defined in the appended claims.

Some particular aspects of the method of the invention are the following:

The suspension of the biomass in the carrier fluid is diluted to less than half, and preferably to less than one fourth of, the concentration that would be required merely in view of conventional technical and economical considerations. In other words, the employed quantity of carrier fluid is much larger than usual, at least twice and preferably five times the usual quantity.

Optionally, to facilitate feeding, the vegetable biomass supplied as starting material can be precut for reduction in size prior to being fed to the comminutor, more particularly prior to being admixed with carrier fluid. Typically, after reduction in size the material will be made up of elongated thin pieces whose length does not exceed about 5 cm. This precutting may be dispensed with where the vegetable biomass is made up of short fibre material, e.g. spent grain.

To save the comminutor, any accompanying material denser than vegetable biomass that may be contained in the starting material, e.g. stones, gravel, sand, dust and other similar materials, is allowed to separate by gravity from the mixture of starting material and aqueous juice, which separation is of course facilitated by the high dilution of the starting material in the mixture.

Subsequent to the passage through the comminutor, the slurry of comminuted biomass suspended in the carrier fluid that flows out of the comminutor is separated into aqueous juice and mush, and in its turn the aqueous juice is divided in two portions. A first one of these portions is recycled to be re-used as carrier fluid in the comminutor. The other or second portion is utilized e.g. for the extraction of valuable products. Also, the quantity of this second portion of aqueous juice that is directed to leave the process has a water content that approximately maintains the water balance and makes up both for the quantity of water that enters the process in form of moisture contained in the vegetable biomass provided as starting material and the quantity of water that leaves the process in form of moisture contained in the mush.

For short, in the method of the invention, (a) about the same quantity of fluid (mainly water) will currently enter the process in form of moisture contained in the vegetable biomass provided as starting material and leave the process in form of aqueous fluid residue of the extraction of valuable products from the aqueous juice and in form of moisture contained in the mush; and (b) a much larger quantity of fluid will currently flow through the comminutor than will currently enter and leave the process as said above.

Actually, the quantity of fluid that is made to flow through the comminutor will depend on the dry matter content of the provided vegetable biomass i.e. the supplied starting material that currently enters the process, and will be adjusted to approximately 10 to 100 times and preferably 16 to 50 times (w/w) the dry matter content of the material. Hence, the quantity of fluid made to flow through the comminutor will be much larger than the fluid quantities approximately equal to each other that enter and leave the process, respectively.

An effective shearing gap of a comminuting stage being defined as a smallest distance of approach between the respective cutting edges of the one and the other operative surface in the associated operative gap of the comminuting stage when the comminutor is operated, the large quantity of fluid that is made to circulate in the comminutor makes it feasible to construct and adjust the comminutor to have a final stage with a fairly large effective shearing gap. Actually, the effective shearing gap will be optimized according to a number of parameters including, but not limited to, the kind of vegetable biomass used as supplied starting material, the type of comminutor used, the latter's rotational speed and the mutual arrangement of its operative surfaces. The effective shearing gap will typically be adjusted to have a width that is larger than about 1 mm. In consideration of the fluid flow, even such a fairly large effective shearing gap provides for a strong shearing and comminuting action of the cutting edges on the biomass material that is suspended in aqueous juice, which results in the production of fibres of biomass material of preserved fibre length, for instance of long thin fibres typically a few centimetres long and up to a few tenth of millimetre in diameter. Up to now such long thin fibres of biomass material could not be produced economically from biomass material in a comminutor.

The long thin fibres that can now be produced from the biomass material by means of the invention make it possible to use the fibre part of the biomass material in new ways and for new products other than before. By way of example, it is now possible to go beyond the usual production of small biocompatible pellets such as fodder pellets and produce larger biocompatible products of high strength for gardening, building and similar purposes, for instance mats, boards and moulded parts such as pots.

It is believed that the strong shearing and comminuting action of the cutting edges on the biomass material that is attained when the comminutor is operated according to the invention also disrupts the structure of cells in the biomass so as to release more of the cell contents than would be achieved with a comminutor operated in the usual manner. This would explain the high percentage recovery of valuable products from the aqueous juice of the process, such as proteins and/or chlorophyll as well as other organic products e.g. usable to produce fermentation products and/or biogas. This would also explain that it is easy to achieve, e.g. by pressing, a particularly low water content in the mush produced from the slurry that flows out of the comminutor - it is believed that the disrupted structure of cells in the fibres makes the latter contain less water and hence, easier to be dried than would be achieved with a comminutor operated in the usual manner.

The invention will now be described and exemplified below in closer detail with reference to the accompanying drawing, wherein
Fig. 1 shows a longitudinal section of a comminuting stage of a rotary comminutor according to the disclosure of EP-B-0134697 for the purpose of illustrating the state of the art; and
Fig. 2 is a block diagram that illustrates schematically the method steps of the present invention.

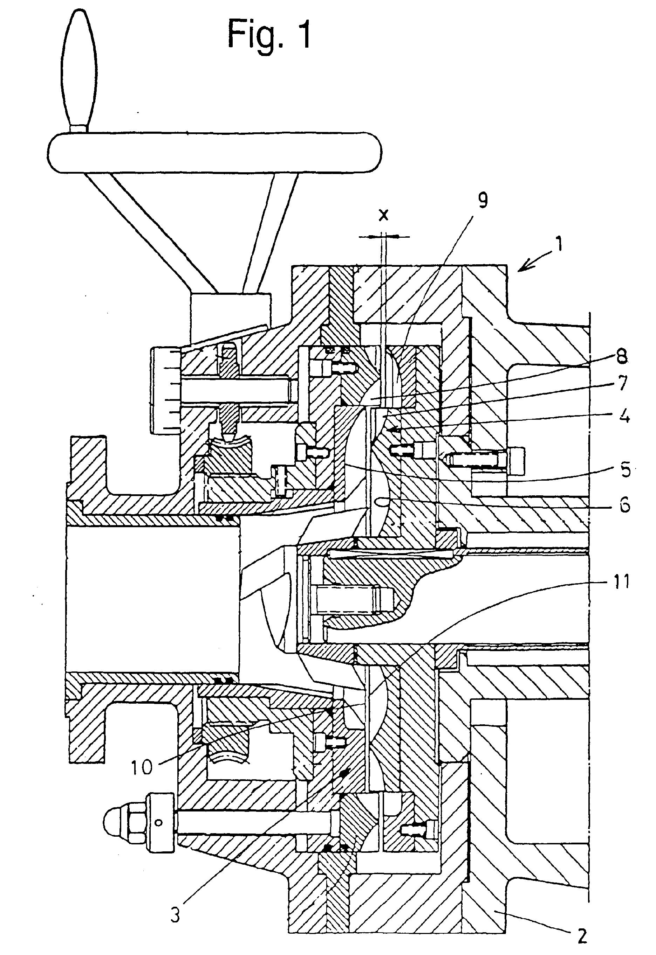

In Fig. 1 an exemplary state of the art is shown as a rotary comminutor, generally referenced 1, according to the disclosure of EP-B-0134697. There is shown a longitudinal section of a portion the rotary comminutor 1 that corresponds to one comminuting stage that is generally referenced 2. In this comminuting stage 2 a stator element 3 and a rotor element 4 are associated with each other and have respective operative surfaces 5 and 6 spaced from each other by an associated operative gap 7 of the stage 2, the operative surfaces 5 and 6 being arranged to face each other across the associated operative gap 7. The operative surfaces 5 and 6 are each equipped with respective cutting elements 8 and 9 that are directed into the associated operative gap 7 and each terminated therein by respective cutting edges 10 and 11.

As the rotary comminutor 1 is operated this will cause a variation of the distance between the cutting edges 10 and 11 that are located on the stator 3 and the rotor 4, respectively, and are correspondingly arranged at the one and the other operative surface 5 and 6. Hence, an effective shearing gap can be defined as a smallest distance of approach between the latter cutting edges 10 and 11 within the associated operative gap 7 of the comminuting stage 2. This effective shearing gap has a width illustrated on Fig. 1 by means of two auxiliary lines that are drawn parallel to each other as an extension of respective cutting edges 10 and 11 and are spaced from each other by a distance referenced x, hence, it should be understood that the effective shearing gap is designated by reference x and the width of the effective shearing gap is the value or measure of x.

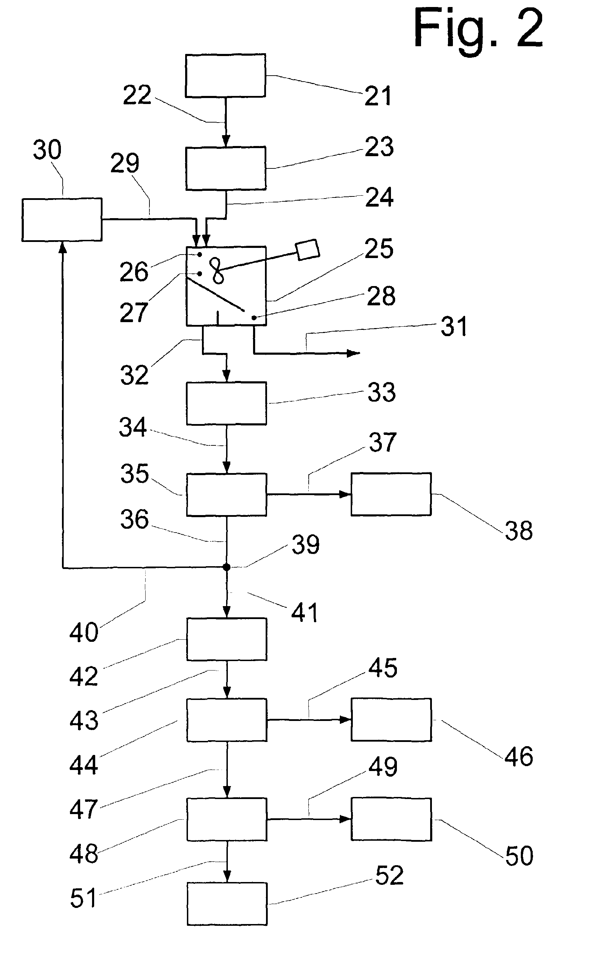

In Fig. 2 the method steps of the present invention are illustrated with the help of a block diagram. It shall be understood that in the following the method steps of the present invention are described in sequence but the method of the present invention is meant to be performed continuously and hence, in continuous operation the method steps take place currently and simultaneously and the quantities referred to must be understood as flow quantities, the flow rates of which can be compared with each other e.g. by weight per unit time.

Block 21 illustrates a supplied starting material that is eventually subjected to the method steps of the present invention and consists of vegetable biomass taken essentially in its naturally moist state.

For exemplary purposes this supplied starting material may be grass from pastureland. In this case, arrow 22 illustrates that the supplied starting material is fed to a cutting machine 23 of any known and appropriate type for being subjected therein to a precutting operation so as to become reduced in size as may be necessary for performing the subsequent method steps. Typically, after reduction in size the precut grass material will be made up of sectioned blades of grass whose length does not exceed e.g. about 5 cm.

The precut material that exits the cutting machine 23 is shown by arrow 24 to be fed to a conditioning vessel generally designated by 25. As Fig. 2 schematically illustrates, located in an upper part of the conditioning vessel 25 the latter has a mixing zone 26 equipped with stirring means 27, and the conditioning vessel 25 also has a settling zone 28 located below the mixing zone 26.

More precisely, as shown by arrow 24 the precut material that exits the cutting machine 23 is fed to the mixing zone 26 of the conditioning vessel 25. As shown by arrow 29, there is also fed to this mixing zone 26 an aqueous juice illustrated by block 30. As will be explained below, this aqueous juice is recycled to the mixing zone 26 of the conditioning vessel 25 from a subsequent step of the method. With the help of the stirring means 27 the material and the aqueous juice fed to the mixing zone 26 of the conditioning vessel 25 as shown by arrows 24 and 29, respectively, are stirred together to produce a mixture thereof within the mixing zone 26 of the conditioning vessel 25.

With the grass from pastureland taken as starting material for exemplary purposes, this mixing has been made possible by the precutting operation that has previously taken place in the cutting machine 23, as described above.

Where for further exemplary purposes a starting material is taken that is naturally made up of short fibre material, e.g. when the starting material is spent grain, the precutting operation and the cutting machine 23 may be dispensed with. Hence, in this case the arrow 22 will directly lead into the arrow 24, i.e. the supplied starting material 21 will be fed directly to the mixing zone 26 of the conditioning vessel 25.

Some foreign material such as stones, gravel, sand, dust and other similar materials may have entered the conditioning vessel 25 together with the supplied starting material 21. Such accompanying material is generally denser than vegetable biomass and will separate by gravity from the mixture of starting material and aqueous juice while the mixing proceeds. The separated foreign material will then sink from the mixing zone 26 of the conditioning vessel 25 to the settling zone 28 of the conditioning vessel 25 to be collected therein and subsequently discharged and disposed of, as illustrated by arrow 31.

The mixture of starting material and aqueous juice from which the foreign material has been removed as described above is fed from the mixing zone 26 of the conditioning vessel 25 to a comminutor 33, as illustrated by arrow 32, while the comminutor 33 is operated. The comminutor 33 can be of the same type as the rotary comminutor 1 described above with reference to Fig. 1, or it can be any equivalent thereof, for instance it can be similar to a disk refiner commonly used in paper making industry.

The operation of the comminutor 33 on the mixture of starting material and aqueous juice fed thereto eventually produces a slurry of comminuted biomass material suspended in aqueous juice.

This slurry is then fed from the comminutor 33 to a separator 35, as illustrated by arrow 34. In this separator 35, the slurry is partitioned into aqueous juice, as illustrated by arrow 36, and mush, as illustrated by arrow 37. This mush has a pulpy consistence and is eventually removed from the separator 35 for further utilization, as illustrated by block 38 to which arrow 37 leads. Typically applicable to grass from pastureland taken as supplied starting material for exemplary purposes in this description, but also applicable to many other starting materials, the removed mush 38 will be utilized as raw wet fibre starting material of pulpy consistence for the production of fibre products of high strength thanks to the long thin fibres contained therein. As mentioned above, such products are biocompatible and may be made appreciably large, so that they are usable for various gardening, building and similar purposes, for instance in making mats, boards and moulded parts such as pots.

Optionally, other organic products can also be extracted from the removed mush 38 for instance by fermentation and/or enzyme degradation of the raw wet fibre starting material.

The aqueous juice removed from the separator 35 as illustrated by arrow 36 is divided at branching point 39 in two unequal portions, a major portion of which is illustrated by arrow 40 and a minor portion of which is illustrated by arrow 41. In continuous operation, hence understood per unit time, the ratio by weight of the major portion of the aqueous juice (arrow 40) to the minor portion of the aqueous juice (arrow 41) is selected to provide for approximate balance by weight between water contained both in the aqueous juice of the minor portion (arrow 41) and in form of moisture in the removed mush (arrow 37), on the one hand, and in form of moisture in the vegetable biomass provided as starting material and about to be processed (arrows 22 and/or 24), on the other hand.

The major portion of the aqueous juice that is removed from the separator 35 is recycled (arrow 40) to the mixing zone 26 of conditioning vessel 25. Incidentally, if some temperature control is required in the process it is possible to provide for control of the temperature of the recycled aqueous juice.

The minor portion of the aqueous juice is removed from the separator 35 for subsequent utilization (arrow 41), an example of which will be described below.

Typically applicable to grass from pastureland taken as supplied starting material for exemplary purposes in this description, but also applicable to many other starting materials, to obtain the desired high strong shearing and comminuting action and produce the desired long thin fibres from the biomass material the ratio by weight (per unit time) of the major portion of the aqueous juice to the minor portion of the aqueous juice is preferably adjusted to be greater than about 4:1, i.e. the flow rate of the major portion of the aqueous juice (arrow 40) will be more that four times by weight the flow rate of the minor portion of the aqueous juice (arrow 41).

Also typically applicable to grass from pastureland taken as supplied starting material for exemplary purposes in this description, but also applicable to many other starting materials, the comminutor 33 may preferably be constructed and operated in such manner that a final comminuting stage thereof has an effective shearing gap, the width of which (referenced x in Fig. 1) is adjusted to be larger than about 1 mm.

The utilization of the minor portion of the aqueous juice removed from the separator 35 may, by way of example, begin with a processing that is illustrated by block 42 to which arrow 41 leads and involves e.g operations such as heating, pH adjustment, settling and the like to precipitate organic products, for instance protein products. The processed mixture is then fed, as illustrated by arrow 43, to a separator such as a decanter, filter, centrifuge or the like that is illustrated by block 44, to separate precipitated organic products from residual fluid.

The separated organic products are then removed, as illustrated by arrow 45, for subsequent utilization. The removed organic products are generally illustrated by block 46 and eventually subjected to operations such as drying by heat and subsequent extraction of organic products and recovery of heat.

For its part, the residual fluid may still contain soluble organic products. Hence, the residual fluid is fed, as illustrated by arrow 47, to an anaerobic fermenter illustrated by block 48 to produce by fermentation, as in conventional waste water plants, biogas whose removal and delivery is illustrated by arrow 49 and clarified water whose removal and delivery is illustrated by arrow 51. The removed biogas is generally illustrated by block 50 and may be utilized for the production of combustion heat that is then recycled to the process e.g. for temperature control of the recycled aqueous juice (arrow 40) and/or drying the extracted organic products (block 46) and/or drying the removed mush 38 and/or the fibre products produced therefrom. The removed clarified water is generally illustrated by block 52 and may be discharged and/or recycled to the process as may be useful.

Alternatively, some instances of the extraction of organic products discussed in the preceding may involve enzyme degradation and concomitant production of enzyme degradation products.

Results obtained by performing the method and method steps of the invention are exemplified in the following, whereby raw fibre is determined according to the Weender method i.e. the amounts indicated in the following do not include hemicellulose.

### Example 1

7692 kg of a mixture of fresh clover and grass that contained 13 % dry matter itself containing 20,5 % raw protein and 16,9 % raw fibre were processed according to the method and method steps of the invention as disclosed in the preceding.

This starting material was fed to the process within about 1 hour, during which time about 26 m³ aqueous juice (the major flow portion of the aqueous juice) was fed and recycled to the conditioning vessel and about 6,2 m³ aqueous juice (the minor flow portion of the aqueous juice) was directed to subsequent utilization, which gives a ratio of about 4,2:1 by weight between the respective major and minor portions of the aqueous juice. The output of clarified water was about 5,7 m³. In the comminutor, the effective shearing gap had a width of about 2 mm and the average resulting speed of flow of the aqueous juice through the effective shearing gap was calculated to be about 5 to 6 m/s.

The recovered products fractions were as follows:
- 888 kg of fibre product after separation and pressing, containing 42 % dry matter itself containing 17,9 % raw protein and 31,4 % raw fibre. Drying of this fibre product required 1227 MJ heat.
- 575 kg of wet protein product containing 32 % dry matter itself containing 38,3 % raw protein and 6,4 % raw fibre. Drying of this fibre product required 2062 MJ heat.
- About 6000 kg of liquid containing about 5500 kg of water, 370 kg of water soluble organic substances and 72 kg of other substances. Processing this liquid could produce 312 m³ of biogas yielding about 640 kWh electric power and about 3460 MJ heat that could be recycled to dry the products mentioned above.

It will be apparent from the above results that in this example the weight of the currenctly recycled aqueous juice is about 26 times the dry weight of the processed vegetable biomass.

The fibre product contained fibres with an average length of 5 to 30 mm and an average diameter of less than 0,1 mm and also proteins which, together with other organic substances, gave the fibre product favourable binding properties. A cold pressing of the fibre product (up to about 8 x 10⁵ N/m²) without any addition of binder allowed to produce boards of various thickness and density (up to 600 kg/m³ after drying). Such boards were suitable (eventually after further processing) for applications such as construction (heat and sound insulation material, flooring material for keeping small animals such as rabbits) and horticulture (substrate material for growing, watering and fertilizing plants). The fibre product is also appropriate e.g. for manufacturing biodegradable composite materials, mats, moulded parts, plant pots, and for manufacturing fodder particularly suitable for horses and rabbits.

The protein product contained about 35-40% raw protein and had properties that made it very suitable as fodder for pigs, poultry and other animals. Also, further processing of this protein product would allow separation and concentration of valuable organic substances such as chlorophyll, linoleic acid, fructans etc.

### Example 2

1260 kg of fresh spent grain that contained 21 % dry matter itself containing 24,2 % raw protein and 14,8 % raw fibre were processed according to the method and method steps of the invention as disclosed in the preceding.

Again, this starting material was fed to the process within about 16 minutes, during which time about 5,3 m³ aqueous juice (the major flow portion of the aqueous juice) was fed and recycled to the conditioning vessel and about 1 m³ aqueous juice (the minor flow portion of the aqueous juice) was directed to subsequent utilization, which gives a ratio of 5,3:1 by weight between the respective major and minor portions of the aqueous juice. The output of clarified water was about 0,5 m³. In the comminutor, the effective shearing gap had a width of about 2 mm and the average resulting speed of flow of the aqueous juice through the effective shearing gap was calculated to be about 5 to 6 m/s.

The recovered products fractions were as follows:
- 536 kg of fibre product containing 28 % dry matter itself containing 11,5 % raw protein and 20,7 % raw fibre.
- 59 kg of wet protein product containing 35 % dry matter itself containing 62,0 % raw protein and 4,4 % raw fibre.
- About 2562 kg of liquid containing about 500 kg of water and 56 kg of water soluble organic substances and ash.

It will be apparent from the above results that in this example the weight of the currenctly recycled aqueous juice is about 20 times the dry weight of the processed vegetable biomass.

The fibre product contained fibres with an average length of 3 to 6 mm and an average diameter of about 0,5 mm. This fibre product was suitable for applications such as a substitute for peat, or for combustion.

The protein product contained about 66% raw protein and had properties that made it very suitable as fodder or even (after further processing) for human consumption, and also as a filler in products such as biodegradable plastics.

The above examples provide an understanding of the method of the invention as disclosed in the preceding. However, it should be understood that the composition and moisture content of the raw material as well as the composition, yield and moisture content of the resulting products may be subject to substantial variation, part of which may be attributed to variation of operating conditions, for instance the temperature of the feed at the separation step or the conditions used for dewatering the fibre products.

### List of Reference Numerals

- x: width of the effective shearing gap

- 1: rotary comminutor

- 2: comminuting stage
- 3: stator element
- 4: rotor element
- 5: operative surface of stator element 3
- 6: operative surface of rotor element 4
- 7: operative gap of stage 1
- 8: cutting element of operative surface 5 of stator 3
- 9: cutting element of operative surface 6 of rotor 4
- 10: cutting edge of cutting element 8
- 11: cutting edge of cutting element 9

- 21: supplied starting material
- 22: feed of starting material
- 23: cutting machine
- 24: feed of precut material
- 25: conditioning vessel
- 26: mixing zone of conditioning vessel
- 27: stirring means in the mixing zone
- 28: settling zone of conditioning vessel
- 29: feed of aqueous juice
- 30: aqueous juice
- 31: discharge and disposal of foreign material
- 32: feed of mixture from mixing zone
- 33: comminutor
- 34: feed of slurry from comminutor
- 35: separator
- 36: aqueous juice from separator
- 37: mush from separator
- 38: removed mush
- 39: branching point
- 40: major flow portion
- 41: minor flow portion
- 42: aqueous juice processing
- 43: feed of processed aqueous juice
- 44: separator
- 45: feed of organic products
- 46: removed organic products
- 47: feed of residual fluid
- 48: anaerobic fermenter
- 49: delivery of biogas
- 50: removed biogas
- 51: delivery of clarified water
- 52: removed clarified water

## Claims

1. A method of continuous separation of vegetable biomass into a fluid phase and a solids containing phase of pulpy consistence, both phases being adapted for further utilization, involving the method steps of
1.a providing the vegetable biomass essentially in a moist state for use as supplied starting material;
1.b providing a conditioning vessel having a mixing zone equipped with stirring means and a settling zone located below the mixing zone;
1.c feeding the starting material to the mixing zone of the conditioning vessel;
1.d feeding aqueous juice recycled from a subsequent step of the method to the mixing zone of the conditioning vessel;
1.e stirring the starting material and the aqueous juice contained in the mixing zone of the conditioning vessel to produce a mixture thereof while allowing any accompanying material denser than vegetable biomass that will have entered the conditioning vessel together with the starting biomass material to separate by gravity from the mixture and sink from the mixing zone of the conditioning vessel to the settling zone of the conditioning vessel to be collected therein;
1.f disposing of the collected accompanying material from the settling zone of the conditioning vessel;
1.g providing a rotary comminutor having at least one comminuting stage comprised of respective stator and rotor elements associated with each other and having respective operative surfaces spaced from each other by an associated operative gap of the stage, said surfaces being arranged to face each other across the associated operative gap, each of said surfaces being equipped with cutting elements that are directed into the associated operative gap and each terminated therein by a respective cutting edge, an effective shearing gap of a comminuting stage being defined as a smallest distance of approach between the respective cutting edges of the one and the other operative surface in the associated operative gap of the comminuting stage when the comminutor is operated;
1.h feeding the mixture from the mixing zone of the conditioning vessel to the comminutor while operating the latter, to produce a slurry of comminuted biomass material suspended in aqueous juice;
1.i feeding the slurry from the comminutor to a separator for partitioning the slurry into aqueous juice and mush;
1.j removing the mush from the separator for further utilization of the removed mush;
1.k removing the aqueous juice from the separator;
1.l dividing the removed aqueous juice into respective major and minor portions whose mutual ratio by weight is selected to provide for approximate balance by weight between water contained both in the aqueous juice of the minor portion and in form of moisture in the removed mush, on the one hand, and in form of moisture in the vegetable biomass provided as starting material, on the other hand;
1.m recycling the aqueous juice of the major portion to the mixing zone of the conditioning vessel; and
1.n providing for utilization of the aqueous juice of the minor portion.

2. The method of claim 1, in which a final comminuting stage of the comminutor has an effective shearing gap whose width is larger than about 1 mm.

3. The method of claim 1, in which the ratio by weight of the major portion of the aqueous juice to the minor portion of the aqueous juice is greater than about 4:1.

4. The method of claim 1, in which the supplied starting material is precut for reduction in size prior to being fed to the mixing zone of the conditioning vessel.

5. The method of any of claims 1 to 4, in which the removed mush is utilized for the production of fibre products and optionally the extraction of other organic products.

6. The method of any of claims 1 to 4, in which the aqueous juice of the minor portion is utilized for the extraction of organic products.

7. The method of any of claims 5 and 6, in which the extraction of organic products includes a fermentation or enzyme degradation and concomitant production of fermentation or enzyme degradation products.

8. The method of any of claims 1 to 4, in which the aqueous juice of the minor portion is utilized for the fermentation of organic products and concomitant production of biogas that is utilized to provide combustion heat.

9. The method of claims 5 and 8, in which the combustion heat is utilized for drying the produced fibre products.

10. The method of claims 6 and 8, in which the combustion heat is utilized for drying the extracted organic products.
